# EUROPEAN PATENT SPECIFICATION

(11) **EP 0 178 116 B1**
(45) Date of publication and mention of the grant of the patent: **29.12.1993**
(21) Application number: 85307022.5
(22) Date of filing: 01.10.1985
(51) Int. Cl.: G11B 7/013, G11B 13/04, G11B 11/10, G11B 7/24

(54) **Optical memory element**
Optisches Speicherelement
Elément de mémoire optique

(30) Priority: 02.10.1984 JP 207838/84
(43) Date of publication of application: 16.04.1986
(60) Divisional application: 93102191.9
(73) Proprietor: SHARP KABUSHIKI KAISHA, Osaka 545 (JP)
(72) Inventor: Ohta, Kneji, Yao-shi Osaka-fu (JP); Inui, Tetuya, Nara-shi Nara-ken (JP); Fujii, Yoshikazu, Nara-shi, Nara-Ken (JP); Deguchi, Toshihisa Daiya Haitsu Gakuenmae C-722, Nara-shi Nara-ken (JP); Maeda, Shigemi, Yamatokoriyama-shi Nara-ken (JP)
(74) Representative: Wright, Peter David John

(56) References cited:
- EP-A- 0 099 085
- EP-A- 0 100 995
- EP-A- 0 126 594
- EP-A- 0 155 000
- WO-A-84/03988

## Description

The present invention relates to an optical memory element which optically performs at least one of information recording, reading and erasing operations.

Recently, an optical memory element, which optically records, reads and erases information, has been gaining attention in various applications as a high density, large capacity memory. Many studies have been made, particularly in relation to an optical disc memory with disc shaped recording element which permits faster access than a tape element.

Since the information recording unit of the optical memory element is about 1µmφ, it is essential to place a light beam at a predetermined position for the information reading or erasing operation; various servo technologies have been employed for this purpose, because it is difficult to control the beam position with dependence on mechanical accuracy alone.

For example, in the optical disc memory, a focus servo is used to compensate for facial movement of the disc (that is, movement substantially perpendicular to the surface of the disc) and a tracking servo to compensate for core movement (that is, movement substantially parallel to the plane of the disc). When the latter servo is used in a read-only type optical memory, beam position is controlled with reference to previously recorded pits (normally, recesses formed in the PMMA or polycarbonate substrate). In the optical memory of the additive recording type (so called add-on memory) or of the erasable memory type, however, guide track grooves and address signal pits indicating the positions of the grooves are normally formed in the substrate.

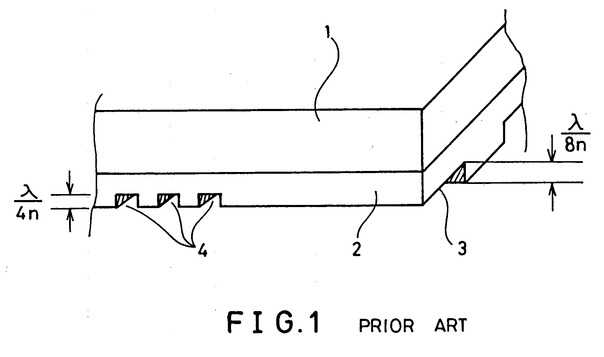

The construction of conventional guide track grooves used in the optical memory of the add-on-memory type is described now with reference to Fig. 1.

Fig. 1 is a partially enlarged view of a conventional optical memory disc in section along the concentric or spiral guide track grooves formed in the disc.

In Fig. 1, 1 denotes a PMMA or glass substrate 1 - 1.5mm thick, and 2 is a photosensitive resin layer (10µm - 100µm thick 2P layer) with guide grooves 3 formed therein for storing information. 4 denotes address signal pits representing the positions of the guide track grooves 3. The depth of the pits 4 is normally λ /4n ( λ is the wave length of the reproducing laser beam, and n is the refractive index of the 2P layer), so that address signals are optimally reproduced. The depth of the guide grooves 3 is λ/8n to permit storage of as many as possible tracking signals.

In addition to the above 2P method, it is also common to form the guide grooves 3 and the pits 4 integrally with the PMMA or polycarbonate resin recording disc. In either method, however, moisture in the resin layer, on which the recording medium is disposed, can reach and deteriorate the recording medium.

To overcome the above problem, the inventor has presented a method for forming grooves directly in a glass substrate.

An example of such a method is described in copending U.S. Patent Application Serial No. 606,534, "METHOD FOR MANUFACTURING AN OPTICAL MEMORY ELEMENT", filed on May 3, 1984 by Kenji OHTA, Junji HIROKANE, Hiroyuki KATAYAMA, Akira TAKAHASHI and Hideyoshi YAMAOKA, and assigned to the same assignee as the present application. The corresponding European Patent Application was filed on May 10, 1984 and assigned the Application No. 84303176.6/Publication No. 0,126,594. This copending European Patent Application was published on 28th November 1984 and comprises prior art in accordance with Article 54(3) EPC. The corresponding Canadian Patent Application was filed on May 8, 1984 and assigned the Application No. 453,843.

According to the disclosure of the copending application, a resist film is disposed on a glass substrate, and a laser beam is applied onto the resist film to form a guide groove and address signal pit pattern in the resist film. The thus formed pattern is developed and, then, the guide groove pattern of the developed resist film is directly formed on the glass substrate by the reactive ion etching operation. With this method, however, it is difficult to form the guide grooves 3 and the address signal pits 4 with different depths, because their depth is determined by the time for which the glass substrate is exposed to plasma in the reactive ion etching operation. Accordingly, the configurations of the guide grooves and the address signal pits must be determined, taking into consideration of the address signal output, tracking output or signal output for reading these outputs.

EP-A3-0 100 995 describes an optical disc with a particular arrangement of address pits and tracking grooves formed in its surface. Data is recorded by melting information pits into the reflective metal recording layer using a laser beam. This data is read out by detecting light intensity variations in light reflected from the disc which are caused by the information pits.

EP-A1-0 099 085 discloses an optical disc in which, again, information is recorded by forming pits, using a laser beam, in a light reflective layer disposed on a transparent substrate. Address signal pits are formed on the bottom surface of a tracking guide. A replication method is disclosed for producing the substrate from a transparent synthetic resin using a master disc formed with recesses defining the tracking guide and address signal pits.

According to a first aspect of the invention there is provided a magneto-optical memory element comprising:
a glass substrate having guide track grooves and address signal pits formed in the glass substrate;
a magneto-optical recording layer formed on the substrate and having a perpendicular magnetization layer, the thickness of the recording layer being constant even when data information is recorded in the recording layer or read-out from the recording layer, wherein address information is read-out by detecting the variation of light beam intensity reflected from the address signal pits, the data information in the magneto-optical recording layer provided on the guide track grooves is read-out by detecting the variation of magnetic polarization angle properties, and wherein the width of the guide grooves is in the range of 0.75 µm to 1.0µm, and the address signal pits are formed with a pit width narrower than the width of the guide grooves, and the depth of the address signal pits being substantially equal to the depth of the guide track grooves and being equal to approximately 70nm; thereby to optimize the quality of read-out of both the data information and the address information.

According to a second aspect of the invention there is provided a method of manufacture of a magneto-optical memory element having track grooves for storing information, and aligned with each track groove an address signal pit for that track groove, the method including forming said guide grooves with a width in the range of 0.75µm to 1.0µm and forming the address signal pits with a smaller width than the width of the track grooves and with a depth substantially equal to the depth of the track grooves, said depth being equal to approximately 70nm, said method comprising the steps of:
depositing a resist film on a glass substrate;
applying a laser beam to said resist film to describe a pattern of track grooves and address signal pits in said resist film;
developing said resist film and etching the substrate so as simultaneously to form said track grooves and address signal pits therein, in accordance with the pattern described in the resist film;
removing the remaining resist film; and
depositing an optical magnetic medium layer on said substrate including said track grooves and said address signal pits.

In order that the present invention may be better understood a detailed description will be given of an embodiment thereof, by way of example, with reference to the accompanying drawings, wherein:
Figure 1 is a perspective view which schematically shows a sectional structure of an optical memory disc of the prior art;
Figure 2 is an enlarged view showing guide grooves and address signal pits representing the addresses of the guide grooves in an optical memory element according to the present invention;
Figure 3 is a partially enlarged view of the optical memory element disc of Figure 2 in section along the guide grooves;
Figure 4 is a conceptual drawing showing the construction of the pick-up for an optical magnetic disc;
Figure 5 is a partially enlarged section view of an optical magnetic disc according to the invention;
Figure 6 shows the relationship between S/N and the track width;
Figures 7(A) and 7(B) show the variation of the address signal according to the track width;
Figures 8(A) and 8(B) show the relationship between the recording signal or address signal pits and the beam diameter;
Figure 9 shows an example method for manufacturing the optical memory element of the present invention; and
Figure 10 shows an example of the electrical input signals for manufacturing the optical memory element of the present invention.

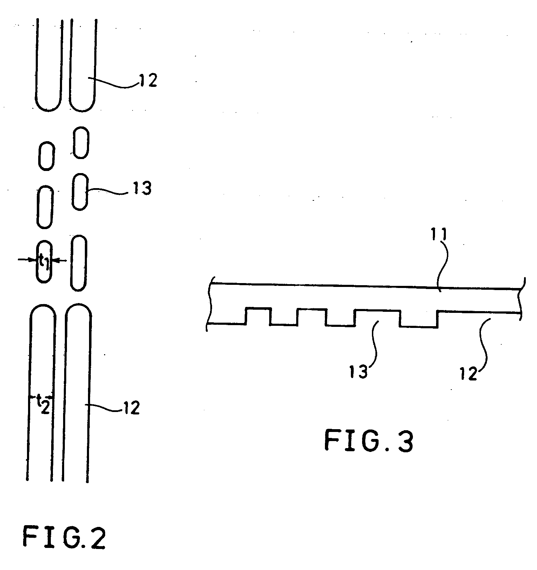

In the figures, 11 is a substrate made of glass. 12 is guide grooves formed in the substrate 11, and 13 is address signal pits representing the numbers of the guide grooves 12. As shown in Fig. 2, the pit width t₁ of the pits 13 is formed narrower than the groove width t₂ of the guide grooves 12.

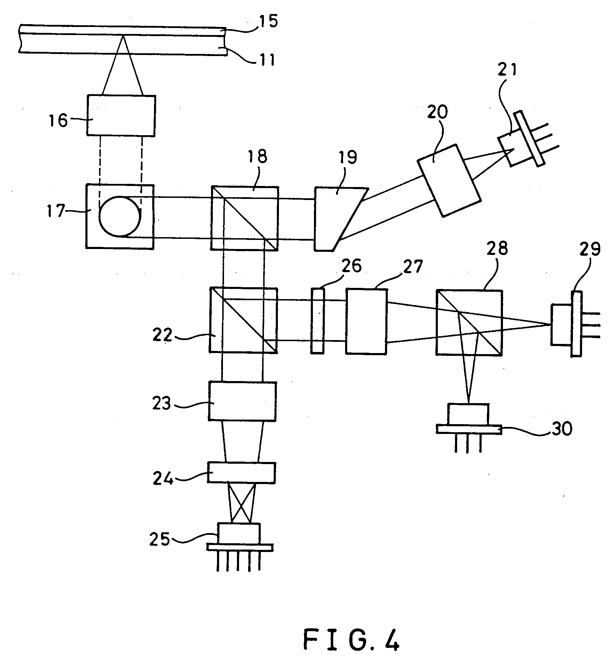

Figure 4 is a conceptual drawing of the construction of the optical system for an optical magnetic disc capable of rewriting the stored information. 11 is a glass substrate, 15 is an optical magnetic recording medium, 16 is an objective lens, 17 is a reflection lens, 18 is a beam splitter, 19 is a beam shape controlling prism, 20 is a collimator lens, 21 is a semiconductor laser, 22 is a beam splitter, 23 is a lens, 24 is a cylindrical lens, 25 is a quarterly PIN photo diode, 26 is a λ/2 filter plate, 27 is a lens, 28 is a deflecting beam splitter, and 29 and 30 are avalanche photo diodes.

In Fig. 4, a tracking signal is obtained from the quarterly PIN photo diode 25 by the push-pull method, and an address signal is obtained by summing the outputs from the two avalanche photo diodes 29 and 30. Information signal is obtained by the differential detection method, that is, by subtraction between the outputs from the avalanche photo diodes 29 and 30. N.A. of the objective lens 16 is 0.6, and the beam is stopped down to about 1.1µm at the position of 1/ₑ2.

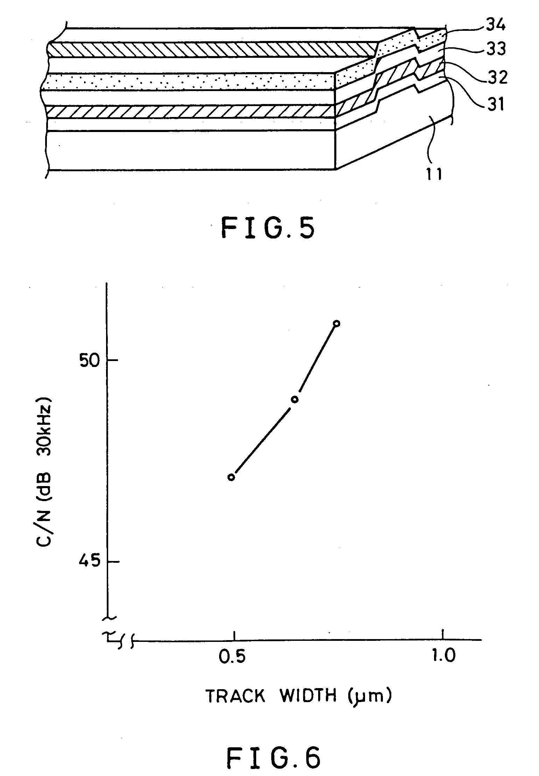

Figure 5 is a partially enlarged view of the optical magnetic disc, in section across the guide track grooves 12, from which disc information is reproduced by the optical system shown in Fig. 4. An AℓN layer 31, GbTbFe 32, AℓN layer 33 and AℓNi layer 34 are formed in lamination on the glass substrate 11 with guide grooves formed therein.

Figure 6 shows C/N plotted as a function of the track width t₂, with 1MHz signal being recorded on or reproduced from the optical magnetic disc (shown in Fig. 5) whose guide groove (track) depth is 70nm.

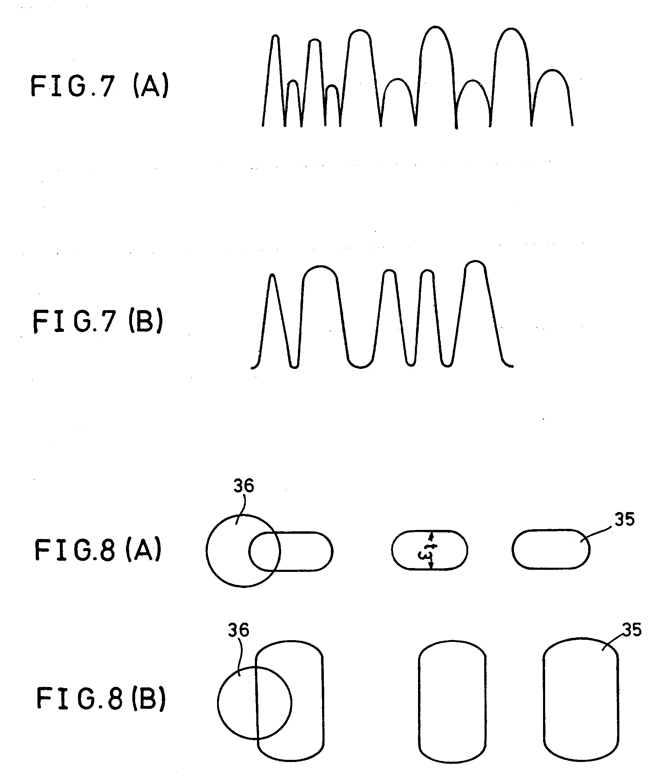

Figure 7 (A) shows the waveform of reproducing address signal of the optical magnetic disc used for the measurement in Fig. 6, for the track width of 0.75µm, and Fig. 7 (B) shows the corresponding waveform for the track width of 0.48µm.

As obvious from Fig. 6, wider track width results in information signal of better C/N. This is easily understood from the following two facts: First, C/N quality depends upon the relationship between the beam diameter 36 and the width t₃ of the signal pits 35 as shown in Fig. 8 (A); ideally, the signal pits 35 should be wider than the beam diameter 36 as shown in Fig. 8 (B). Second, the pit width in the optical magnetic disc having the guide grooves therein is limited by the width t₂ of the guide grooves 12.

Further, it is also appreciated from Figs. 7 (A) and 7 (B) that narrower address signal pit width t₁ effects better result. When a wider pit width t₁ is selected, namely, when the signal pits 35 in Fig. 8 (B) are considered as address signal pits, for instance, the beam 36, which comes in the center of a pit 35, completely enter the pit 35, resulting in the condition as if there was no pit. As a result, amount of light returning to the detector will increase. This is why the signal is high at the center, as shown in Fig. 7(A).

It will be well understood from the above description that, in the optical magnetic recording disc having about λ /8n (65∼70nm) deep guide track grooves 12 and address signal pits 13, the larger width t₂ of the guide track grooves 12 and the narrower width t₁ of the address signal pits 13, as shown in Fig. 2, yield the better result.

For the optical memory element with the above mentioned construction in which an optical head shown in Fig. 4 is used with a disc shown in Figs. 2, 3 and 5, sufficient tracking signal is obtained with 1µm or narrower track width t₂.

As described above, one of the features of the optical memory element of the present invention is that, where address signal pits are as deep as a guide track groove as shown in Fig. 2, the width of the address signal pits is made narrower and that of the guide track groove made wider.

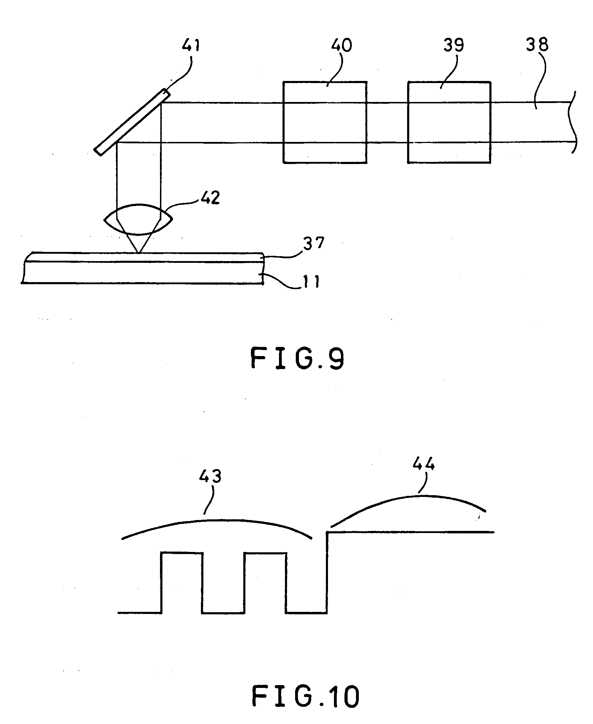

Now, the manufacturing steps for a glass disc used in the present invention will be described in the following with reference to Figure 9.

### Step (i)

A resist film 37 is applied on a glass substrate 11 which does not pass oxygen and moisture therethrough.

### Step (ii)

An argon (Ar) laser beam 38 is applied to the resist film 37 disposed on the glass substrate 11, via a light modulators 39 and 40, a mirror 41 and a condenser 42, so as to describe lines of the width t₂ for the guide track grooves 12 (shown in Fig. 2) of the optical memory element as well as intermittent lines of the width t₁ (See Fig. 9 ) for the address signal pits 13. The required widths for the guide track grooves 12 and the address signal pits 13 are obtained by making the laser power larger in describing the lines for the guide track grooves 12 than in describing the intermittent lines for the address signal pits 13.

Specifically, the light modulators 39 and 40 are placed in the light path of the laser (for example, Ar) beam 38, as shown in Fig. 9. One of the light modulators is used for modulating address signals, the other being used for reducing the laser power a little when describing the lines for the address signal pits. Instead of using the above two modulators, a modulator with which modulation changes linearly according to the input may be used. In this case, the input power height 43 (Fig. 10) for recording the address signal pits is made lower than the input power height 44 for recording the guide track grooves.

### Step (iii)

The resist film 37 with the lines and the intermittent lines thereon is developed to form grooves and pits in the resist film 37.

### Step (iv)

Sputtering operation (reactive ion etching) is conducted to the glass substrate 11 coated with the resist film 37 having the grooves formed therein, in the etching gas atmosphere such as CF₄ or CHF₃, so as to form the grooves 12 and the pits 13 in the glass substrate 11.

### Step (v)

The developed resist film 37 is removed from the glass substrate 11 through the use of solvent such as acetone, or by sputtering operation in the O₂ atmosphere. As a result, the guide track grooves 12 of the width t₂ and the address signal pits 13 of the width t₁ are formed in the glass substrate 11.

In this way, the guide track grooves 12 and the address signal pits 13 of the configurations as shown in Fig. 2 are formed in the glass substrate 11.

## Claims

1. A magneto-optical memory element (11) comprising:
a glass substrate having guide track grooves (12) and address signal pits (13) formed in the glass substrate; and
a magneto-optical recording layer (15) formed on the substrate and having a perpendicular magnetization layer, the thickness of the recording layer being constant even when data information is recorded in the recording layer or read-out from the recording layer,
wherein address information is read-out by detecting the variation of light beam intensity reflected from the address signal pits (13), the data information in the magneto-optical recording layer (15) provided on the guide track grooves (12) is read-out by detecting the variation of magnetic polarization angle properties, and wherein the width of the guide grooves (12) is in the range of 0.75µm to 1.0µm, and the address signal pits (13) are formed with a pit width narrower than the width of the guide grooves (12), and the depth of the address signal pits (13) being substantially equal to the depth of the guide track grooves (12) and being equal to approximately 70nm; thereby to optimize the quality of read-out of both the data information and the address information.

2. A magneto-optical memory element according to claim 1, wherein the data information is read-out by detecting the differences in the magneto-optical rotation angles corresponding to the directions of magnetization of the perpendicular magnetization layer provided on the grooves.

3. A magneto-optical memory element according to claim 1 or claim 2, wherein the address signal information is read-out by detecting diffraction of light beam intensity reflected from the address signal pit.

4. A method of manufacture of a magneto-optical memory element (11) having track grooves (12) for storing information, and aligned with each track groove (12) an address signal pit (13) for that track groove (12), the method including forming said guide grooves with a width in the range of 0.75µm to 1.0µm and forming the address signal pits with a smaller width than the width of the track grooves and with a depth substantially equal to the depth of the track grooves, said depth being equal to approximately 70nm, said method comprising the steps of:
depositing a resist film (37) on a glass substrate (11);
applying a laser beam to said resist film to describe a pattern of track grooves (12) and address signal pits (13) in said resist film (37);
developing said resist film and etching the substrate (11) so as simultaneously to form said track grooves (12) and address signal pits (13) therein, in accordance with the pattern described in the resist film (37);
removing the remaining resist film (37); and
depositing an optical magnetic medium layer (15) on said substrate (11) including said track grooves (12) and said address signal pits (13).

5. A method according to claim 4 wherein the laser beam is applied at different power intensities for formation of the track grooves (12) and address signal pits (13) respectively.

6. A method according to claim 5 wherein the laser power intensity for formation of the address signal pits (13) is lower than that for formation of the track grooves (12).

7. A method according to any of claims 4 to 6 wherein each of said track grooves (12) and its respective address signal pit (13) are formed at spaced apart locations on the optical memory element (11).

8. A method according to any of claims 4 to 7 wherein the magnetic medium layer (15) comprises an alloy film including a rare earth element and a transition metal.

## Patentansprüche

1. Magnetooptisches Speicherelement (11), welches umfaßt:
ein Glassubstrat, das Leitspurrillen (12) und Adreßsignalgrübchen (13) hat, die in dem Glassubstrat ausgebildet sind;
eine magnetooptische Aufzeichnungsschicht (15), die auf dem Substrat ausgebildet ist und eine senkrechte Magnetisierungsschicht hat, wobei die Dicke der aufzeichnenden Schicht selbst dann konstant ist, wenn Dateninformationen in der aufzeichnenden Schicht aufgezeichnet oder davon gelesen werden, wobei die Adreßinformation durch Feststellen der Schwankungen der Intensität des von den Adreßsignalgrübchen (13) reflektierten Lichtstrahls gelesen werden, die Dateninformationen in der magnetooptischen Aufzeichnungsschicht (15), die auf den Leitspurrillen (12) vorgesehen sind, durch Feststellen der Änderung von magnetischen Polarisationswinkeleigenschaften gelesen werden und
wobei die Breite der Leitrillen (12) in dem Bereich von 0,75 µm bis 1,0 µm liegt und die Adreßsignalgrübchen (13) mit einer Grübchenbreite gebildet sind, die schmaler als die Breite der Leitrillen (12) ist und wobei die Tiefe der Adreßsignalgrübchen (13) im wesentlichen gleich der Tiefe der Leitspurrillen (12) und gleich ungefähr 70 nm ist, wodurch die Qualität des Lesens sowohl der Dateninformationen, als auch der Adreßinformationen optimiert wird.

2. Magnetooptisches Speicherelement nach Anspruch 1, bei welchem die Dateninformationen durch Feststellen der Differenzen bei den magnetooptischen Rotationswinkeln zu den Magnetisierungsrichtungen der senkrechten Magnetisierungsschicht, die auf den Rillen vorgesehen ist, gelesen werden.

3. Magnetooptisches Speicherelement nach Anspruch 1 oder 2, bei welchem die Adreßsignalinformation durch Feststellen der Beugung der Lichtstrahlintensität, die von dem Adreßsignalgrübchen reflektiert wird, gelesen wird.

4. Herstellungsverfahren eines magnetooptischen Speicherelements (11), das Spurrillen (12) für das Speichern von Informationen und fluchtend mit jeder Spurrille (12) ein Adreßsignalgrübchen (13) für jene Spurrille (12) hat, wobei das Verfahren die Bildung dieser Spurrillen mit einer Breite im Bereich von 0,75 µm bis 1,0 µm und das Bilden der Adreßsignalgrübchen mit einer geringeren Breite als der Breite der Spurrillen und mit einer Tiefe im wesentlichen gleich der Tiefe der Spurrillen umfaßt, wobei diese Tiefe gleich ungefähr 70 nm ist und wobei dieses Verfahren die folgenden Schritte umfaßt:
Ablagern einer Resistschicht (37) auf einem Glassubstrat (11);
Aufbringen eines Laserstrahls auf die Resistschicht, um ein Raster von Spurrillen (12) und Adreßsignalgrübchen (13) in der Resistschicht (37) zu beschreiben;
Entwickeln der Resistschicht und Ätzen des Substrats (11), um auf diese Weise gleichzeitig die Spurrillen (12) und Adreßsignalgrübchen (13) darin in Übereinstimmung mit dem in der Resistschicht (37) beschriebenen Raster zu bilden;
Entfernen der restlichen Resistschicht (37); und
Auftragen einer Schicht eines magnetooptischen Mediums (15) auf dem Substrat (11), das die Spurrillen (12) und die Adreßsignalgrübchen (13) einschließt.

5. Verfahren nach Anspruch 4, bei welchem der Laserstrahl mit unterschiedlicher Energieintensität für die Bildung der Spurrillen (12) beziehungsweise der Adreßsignalgrübchen (13) aufgebracht wird.

6. Verfahren nach Anspruch 5, bei welchem die Laser-Energieintensität für die Bildung der Adreßsignalgrübchen (13) geringer als für die Bildung der Spurrillen (12) ist.

7. Verfahren nach einem der Ansprüche 4 bis 6, bei welchem jede dieser Spurrillen (12) und deren entsprechendes Adreßsignalgrübchen (13) an voneinander in einem gewissen Abstand stehenden Stellen auf dem optischen Speicherelement (11) gebildet werden.

8. Verfahren nach einem der Ansprüche 4 bis 7, bei welchem die Schicht des magnetischen Mediums (15) eine legierte Schicht umfaßt, die ein seltenes Erdmetall und ein Übergangsmetall einschließt.

## Revendications

1. Elément de mémoire magnéto-optique (11), comprenant :
un substrat en verre ayant des sillons de piste de guidage (12) et des microcuvettes de signal d'adresse (13) formés dans le substrat en verre ; et
une couche d'enregistrement magnéto-optique (15) formée sur le substrat et ayant une couche de magnétisation perpendiculaire, l'épaisseur de la couche d'enregistrement étant constante même lorsque des informations de données sont enregistrées dans la couche d'enregistrement ou lues à partir de la couche d'enregistrement,
dans lequel l'information d'adresse est lue par détection de la variation d'intensité du faisceau lumineux réfléchie par les microcuvettes de signal d'adresse (13), les informations de données dans la couche d'enregistrement magnéto-optique (15) située sur les sillons de piste de guidage (12) étant lues par détection de la variation des propriétés d'angle de polarisation magnétique,
et dans lequel la largeur des sillons de guidage (12) se situe dans la plage de 0,75 µm à 1,0 µm, et les microcuvettes de signal d'adresse (13) sont formées avec une largeur de microcuvette plus étroite que la largeur des sillons de guidage (12), la profondeur des microcuvettes de signal d'adresse (13) étant sensiblement égale à la profondeur des sillons de piste de guidage (12) et étant égale approximativement à 70 nm, pour ainsi optimiser la qualité de la lecture à la fois de l'information de donnée et de l'information d'adresse.

2. Elément de mémoire magnéto-optique selon la revendication 1, dans lequel l'information de donnée est lue par détection des différences des angles de rotation magnéto-optique, correspondant aux sens de magnétisation de la couche de magnétisation perpendiculaire présente sur les sillons.

3. Elément de mémoire magnéto-optique selon la revendication 1 ou la revendication 2, dans lequel l'information de signal d'adresse est lue par détection de la diffraction de l'intensité du faisceau lumineux, réfléchie par la microcuvette de signal d'adresse.

4. Procédé de fabrication d'un élément de mémoire magnéto-optique (11) ayant des sillons de piste (12) pour mémoriser l'information, et en alignement avec chaque sillon de piste (12), une microcuvette de signal d'adresse (13) pour ce sillon de piste (12), le procédé comprenant la formation desdits sillons de guidage avec une largeur située dans la plage de 0,75 µm a 1,0 µm et la formation des microcuvettes de signal d'adresse avec une largeur inférieure à la largeur des sillons de piste et avec une profondeur sensiblement égale à la profondeur des sillons de piste, ladite profondeur étant égale approximativement à 70 nm, ledit procédé comprenant les étape consistant à :
déposer une couche de résist (37) sur un substrat en verre (11) ;
diriger un faisceau laser sur ladite couche de résist pour tracer un motif de sillons de piste (12) et de microcuvettes de signal d'adresse (13) dans ladite couche de résist (37) ;
développer ladite couche de résist et attaquer chimiquement le substrat (11) de manière à y former simultanément lesdits sillons de piste (12) et lesdites microcuvettes de signal d'adresse (13), selon le motif tracé dans la couche de résist (37) ;
éliminer la couche de résist (37) restante ; et
déposer une couche de milieu magnétique optique (15) sur ledit substrat (11) comportant lesdits sillons de piste (12) et lesdites microcuvettes de signal d'adresse (13).

5. Procédé selon la revendication 4, dans lequel le faisceau laser est utilisé à des intensités de puissance différentes pour la formation respective des sillons de piste (12) et des microcuvettes de signal d'adresse (13).

6. Procédé selon la revendication 5, dans lequel l'intensité de puissance du faisceau laser pour la formation des microcuvettes de signal d'adresse (13) est inférieure à celle utilisée pour la formation des sillons de piste (12).

7. Procédé selon l'une quelconque des revendications 4 à 6, dans lequel chacun desdits sillons de piste (12) et sa microcuvette de signal d'adresse (13) correspondante sont formés en des emplacements espacés entre eux sur l'élément de mémoire optique (11).

8. Procédé selon l'une quelconque des revendications 4 à 7, dans lequel la couche de milieu magnétique (15) comprend une couche d'alliage comportant un élément de terre rare et un métal de transition.
